# EUROPEAN PATENT SPECIFICATION

(11) **EP 2 287 208 B1**
(45) Date of publication and mention of the grant of the patent: **09.05.2012**
(21) Application number: 10172765.9
(22) Date of filing: 13.08.2010
(51) Int. Cl.: C08F 4/651, C08F 10/06, B01J 31/02, B01J 27/135

(54) **A catalyst component for olefin polymerization and a catalyst comprising the same**
Katalysatorkomponente zur Olefinpolymerisierung und Katalysator damit
Composant de catalyseur pour la polymérisation d'oléfines et catalyseur le comprenant

(30) Priority: 13.08.2009 CN 200910162346; 10.02.2010 CN 201010108066; 10.02.2010 CN 201010108068
(43) Date of publication of application: 23.02.2011
(73) Proprietor: China Petroleum & Chemical Corporation, Beijing 100728 (CN); Beijing Research Institute of Chemical Industry, China Petroleum & Chemical Corporation, Chaoyang District Beijing 100013 (CN)
(72) Inventor: Xie, Lunjia, 100013, Beijing (CN); Ling, Yongtai, 100013, Beijing (CN); Tian, Yu, 100013, Beijing (CN); Feng, Zaixing, 100013, Beijing (CN); Zhao, Siyuan, 100013, Beijing (CN); Hu, Qing, 100013, Beijing (CN); Sun, Zhufang, 100013, Beijing (CN); Kang, Yu, 100013, Beijing (CN)
(74) Representative: HOFFMANN EITLE

(56) References cited:
- WO-A1-02/30998
- WO-A1-99/11677
- US-A1- 2009 171 044

## Description

### Cross Reference of Related Applications

The present application claims the benefit of the Chinese Patent Application No. 200910162346.0, filed on August 13, 2009, No. 201010108066.4, filed on February 10, 2010, and No. 201010108068.3, filed on February 10, 2010.

### Field of the Invention

The present invention relates to a catalyst component for olefin polymerization, a catalyst comprising the catalyst component, and use of the catalyst in olefin polymerization, and more specifically, to a solid catalyst component for olefin polymerization comprising an α-cyanosuccinate compound as an internal electron donor, a catalyst comprising the catalyst component, and use of the catalyst in olefin polymerization.

### Background Art

It is well known in the art that a Ziegler-Natta catalyst consists of at least two components: transition metal-containing active component, known also as main catalyst, which comprises generally a titanium compound or a vanadium compound supported on a magnesium dichloride support; and an organometallic compound containing an element from Group IA to IIIA of the Periodic Table, known also as co-catalyst, which is generally an alkyl aluminum or an alkylaluminum halide. In some cases, especially in propylene polymerization, a third component is generally included to control the isotacticity of the product, enhance polymerization activity . The third component is generally a Lewis base, known also as electron donor compound. The electron donor introduced during the preparation of the solid main catalyst component is known as internal electron donor, and the electron donor added together with the solid main catalyst component and the cocatalyst to the olefin polymerization system is known as external electron donor.

There are many compounds useful as internal electron donor, such as aromatic diester compounds, including diisobutyl phthalate, used in CN85100997 and USP4784983, diether compounds used in EP 361494, esters of diols used in CN 1453298, 2,3-dihydrocarbylsuccinate compounds used in CN1313869, ω-cyano C₂-C₅ monocarboxylate compounds used in CN1242780A. However, these internal electron donor compounds each have defects to some extent. For instance, the catalysts containing an aromatic diester compound exhibit lower catalytic activities than those containing a diether compound; the catalysts containing a diether compound give polymers having relatively narrow molecular weight distribution, although such catalysts have higher catalytic activities and good hydrogen response; the catalysts containing a 2,3-dihydrocarbylsuccinate compound give polymers having broader molecular weight distribution, but these internal electron donor compounds are difficult to be synthesized in industrial scale; the catalysts containing an ω-cyano C₂-C₅ monocarboxylate compound as internal electron donor exhibit lower catalytic activities and give polymer having lower isotacticities, compared with those catalysts containing an aromatic diester compound.

The prior art also discloses the use of combinations of different internal electron donor compounds in catalysts for olefin polymerization. See, for example, WO03002617, CN101165074A,CN1958621A,CN1274724C, and CN1221573C.

Since the internal electron donor plays an important role in the catalysts for olefin polymerization and the known internal electron donors suffer from some defects in practical application, finding new internal electron donor compound is still one of research hotspots in the art.

### Summary of the Invention

After diligently studying, the inventors have found that solid catalyst components prepared by using an α-cyanosuccinate compound of the formula (I) defined below as an internal electron donor, when used together with a cocatalyst and an external electron donor in olefin polymerization, exhibit desired catalytic effect. In particular, when used in propylene polymerization, the catalyst components exhibit satisfied catalytic effect. Furthermore, the α-cyanosuccinate compounds of the formula (I) can be prepared more easily and thus at lower cost than the known 2,3-dialkylsuccinate compounds.

Thus, an object of the invention is to provide a solid catalyst component for olefin polymerization, which comprises magnesium, titanium, a halogen, and an internal electron donor, wherein the internal electron donor is at least one α-cyanosuccinate compound I as defined below or, alternatively, a combination of the at least one α-cyanosuccinate compound I and a monofunctional or difunctional compound E chosen from esters other than the α-cyanosuccinate compounds, ethers, ketones, ketals, amines and silanes.

A further object of the invention is to provide a catalyst for the polymerization of an olefin of formula CH₂=CHR, in which R is hydrogen or an alkyl having 1 to 6 carbon atoms, comprising a reaction product of the following components: (1) the solid catalyst component of the invention; (2) an alkyl aluminum compound; and (3) optionally, an external electron donor compound.

A still further object of the invention is to provide a process for polymerizing an olefin, comprising contacting an olefin of formula CH₂=CHR, wherein R is hydrogen or an alkyl having 1 to 6 carbon atoms, optionally another kind of said olefin as comonomer, and optionally a diene as a second comonomer, with the catalyst of the invention under polymerization conditions; and recovering the resulting polymer.

### Detailed Description of the Preferred Embodiments

The term "polymerization" as used herein intends to include homopolymerization and copolymerization. The term "polymer" as used herein intends to include homopolymer, copolymer and terpolymer.

As used herein, the term "catalyst component" intends to means main catalyst component or procatalysy, which, together with a conventional cocatatyst such as an alkyl aluminum and an optional external electron donor, constitutes the catalyst for olefin polymerization.

In a first aspect, the present invention provides a solid catalyst component for olefin polymerization, comprising magnesium, titanium, a halogen, and an internal electron donor, wherein the internal electron donor is at least one α-cyanosuccinate compound I having the formula (I): 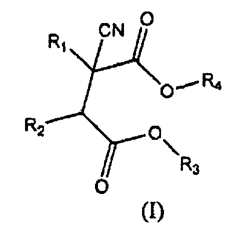 where R₁ and R₂ are independently hydrogen, C₁-C₁₄ linear or branched alkyl, C₃-C₁₀ cycloalkyl, C₆-C₁₀ aryl, C₇-C₁₀ alkaryl or C₇-C₁₀ aralkyl; and R₃ and R₄ are independently C₁-C₁₀ linear or branched alkyl, C₃-C₁₀ cycloalkyl, C₆-C₂₀ aryl, C₇-C₂₀ alkaryl or C₇-C₂₀ aralkyl,
alternatively, the internal electron donor is a combination of the at least one α-cyanosuccinate compound I and a monofunctional or difunctional compound E chosen from esters other than the α-cyanosuccinate compound 1, ethers, ketones, ketals, amines and silanes.

In an embodiment, the IR spectra of the solid catalyst components according to the invention have a characteristic absorption peak T in a range of from 2240cm⁻¹ to 2345cm⁻¹.

In another embodiment, the IR spectra of the solid catalyst components according to the invention have a characteristic absorption peak T in a range of from 2240cm⁻¹ to 2295cm⁻¹.

In an embodiment, the internal electron donor is a combination of the α-cyanosuccinate compound I and a monofunctional or difunctional compound E chosen from esters other than the α-cyanosuccinate compound I, ethers, ketones, ketals and silanes. In a preferred embodiment, the internal electron donor is a combination of the α-cyanosuccinate compound I and a monofunctional or difunctional compound E chosen from esters other than the α-cyanosuccinate compound I, ethers and silanes. In these cases, the α-cyanosuccinate compound I accounts for 5mol% to 95mol% of the combination, and preferably 50mol%-95mol% of the combination.

In a subaspect of the first aspect of the invention, the solid catalyst component according to the invention is obtained by a process comprising the steps of
(1) dissolving a magnesium halide or a magnesium halide hydrate in a solvent system comprising an organic epoxy compound, an organophosphorus compound and an optional inert diluent, to form a homogeneous solution A;
(2) combining the above homogeneous solution A with a titanium compound and an auxiliary precipitant, to form a mixture B;
(3) precipitating solids C from the mixture B;
(4) separating solids D from the product of step (3); and
(5) treating the solids D with a titanium compound in an inert organic solvent one or more times, to obtain the solid catalyst component,
wherein the internal electron donor is introduced at any stage before the separation of step (4),
wherein the molar ratio of the magnesium halide to the titanium compound to the internal electron donor, used in the process, is 1-200:20-4000:1, and preferably 5-100:50-2000:1.
In the preparation of the solid catalyst component, the homogeneous solution A is prepared by dissolving a magnesium halide in a solvent system containing an organic epoxy compound, an organophosphorus compound and an optional inert diluent. The preparation of the homogeneous solution A may follow the process disclosed by CN85100997 and USP 4784983 .

In an embodiment, the magnesium halide is chosen from magnesium dihalides, magnesium dihalide hydrates, alcohol complexes of magnesium dihalides, derivatives of magnesium dihalides wherein one halogen atom in the magnesium dihalides is replaced with an alkoxy or a halogenated alkoxy, and mixtures thereof, and preferably from magnesium dihalides, magnesium dihalide hydrates, and alcohol complexes of magnesium dihalides. The specific examples include magnesium dichloride, magnesium dibromide, magnesium diiodium, and hydrates and alcohol complexes thereof.

In an embodiment, the solvent system used in step (1) consists of an organic epoxy compound, an organophosphorus compound and an optional inert diluent.

Organic epoxy compounds useful in the invention include aliphatic epoxy compounds and diepoxy compounds, halogenated aliphatic epoxy compounds and diepoxy compounds, aryl epoxy compounds, glycidyl ether, and inner ethers, having from 2 to 8 carbon atoms. Examples include epoxy ethane, epoxy propane, epoxy butane, vinyl epoxy ethane, butadiene dioxide, epoxy chloropropane, glycidyl methyl ether, diglycidyl ether, and tetrahydrofuran, with epoxy chloropropane being preferred. These organic epoxy compounds may be used alone or in combination.

Organophosphorus compounds useful in the invention include hydrocarbyl esters of orthophosphoric acid, halogenated hydrocarbyl esters of orthophosphoric acid, hydrocarbyl esters of phosphorous acid, and halogenated hydrocarbyl esters of phosphorous acid. Examples include trimethyl orthophosphate, triethyl orthophosphate, tributyl orthophosphate, triphenyl orthophosphate, trimethyl phosphite, triethyl phosphite, tributyl phosphite and tribenzyl phosphite, with tributyl orthophosphate being preferred. These organophosphorus compounds may be used alone or in combination.

Relative to one mole of the magnesium halide, the amount of the organic epoxy compound used ranges from 0.2 to 10 moles, preferably from 0.2 to 5 moles, and more preferably from 0.5 to 2 moles, and the amount of the organophosphorus compound used ranges from 0.1 to 3 moles, preferably from 0.3 to 2 moles, and more preferably from 0.7 to 1.2 moles.

The optional inert diluent may be chosen from hexane, heptane, octane, decane, benzene, toluene, xylene, 1,2-dichloroethane, chlorobenzene, and other hydrocarbon and halogenated hydrocarbon solvents, as long as it can facilitate the dissolution of the magnesium halide. These inert diluents may be used alone or in combination. The amount of the inert diluent, if used, is not particularly crucial, however, it preferably ranges from 0.1 to 10 liters per mole of the magnesium halide, preferably from 0.2 to 5 liters per mole of the magnesium halide, more preferably from 1.2 to 2.4 liters per mole of the magnesium halide, and most preferably from 1.4 to 2.0 liters per mole of the magnesium halide.

In step (1), dissolving temperature can be easily determined by a person ordinarily skilled in the art depending on the solvent selected and the amount of the solvent used. In general, dissolving temperature may be between 10°C and 150°C, and preferably between 50°C and 120°C, and the upper limit of the temperature is generally not higher than the boiling point of the solvent.

In step (2), the homogeneous solution A is combined with a titanium compound and an auxiliary precipitant, to form the mixture B. For example, the homogeneous solution A can be combined first with an auxiliary precipitant, and then with a titanium compound. Alternatively, the homogeneous solution A can be combined first with a titanium compound, and then with an auxiliary precipitant. The combination operation can be carried out at a temperature ranging from -50 to 0 °C.

In step (3), the mixture B is slowly heated (for example, over about 0.5 to 3 hours) to a temperature of from 60 to 110°C, such as 80°C, and upon the target temperature being reached, the mixture can be stirred further for 0.5 to 8 hours. During the heating and/or the stirring after the target temperature has been reached, solids C are precipitated. Then solids D are separated in step (4).

The auxiliary precipitant may be at least one compound chosen from organic anhydrides, organic acids, ethers, aldehydes, ketones, esters as disclosed in CN85100997 and USP 4784983, and preferably from phthalates. The α-cyanosuccinate compound of the formula (I) may also serve as an auxiliary precipitant. The molar ratio of the auxiliary precipitant to the magnesium halide ranges from 0.03:1 to 1:1.

In step (5), the solids D are treated with a titanium compound and an optional inert organic solvent, to form the solid catalyst component for olefin polymerization. Examples of the inert organic solvent include hexane, heptane, octane, decane, benzene, toluene, xylene, and mixtures thereof. The treatment can be conducted according to the process disclosed in CN85100997 and USP 4784983.

The titanium compound used in step (2) and the titanium compound used in step (5) may be the same or different, and they have general formula: TiXₙ(OR⁵)₄₋ₙ, in which R⁵ is independently a C₁-C₂₀ hydrocarbyl, and preferably a C₁-C₁₄ aliphatic hydrocarbyl, X is independently F, Cl or Br, and n is an integer ranging from 1 to 4. Examples include titanium tetrachloride, titanium tetrabromide, tetrabutoxy titanium, tetraethoxy titanium, triethoxy titanium chloride, diethoxy titanium dichloride, ethoxy titanium trichloride, and mixtures thereof, with titanium tetrachloride being preferred. Conveniently, the same titanium compound is used in step (2) and in step (5). Relative to one mole of the magnesium halide, the amount of the titanium compound used in step (2) ranges from 1.5 to 50 moles, and preferably from 4 to 30 moles, and the amount of the total titanium compound used in step (2) and step (5) ranges from 2 to 150 moles, and preferably from 5 to 60 moles.

In the process, the internal electron donor may be added at any time before the obtainment of the solids D. For example, it is possible to contact the homogeneous solution A or the mixture B or the solids C-containing mixture B with the internal electron donor. Furthermore, the internal electron donor may be added in one or more portions. The temperature for introducing the internal electron donor may range from 0°C to 80°C, and preferably from 0°C to 60°C. Preferably, the internal electron donor is added when the mixture B is heated to a temperature ranging from 0°C to 60°C.

In another subaspect of the first aspect of the invention, the solid catalyst component according to the invention comprises a reaction product of a magnesium halide-alcohol adduct, a titanium compound and the internal electron donor, wherein the magnesium halide-alcohol adduct is represented by the formula (II):

MgX₂•(ROH)ₘ (II)

where X is chlorine or bromine, and preferably chlorine; R is a C₁-C₁₂ alkyl, a C₃-C₁₀ cycloalkyl or a C₆-C₁₀ aryl, and preferably a C₁-C₄ alkyl; and m ranges from 1 to 5, and preferably from 1.5 to 3.5.

The titanium compound is as described above.

In an embodiment, the molar ratio of the magnesium halide-alcohol adduct to the titanium compound to the internal electron donor, used in the reaction to form the solid catalyst component, in terms of Mg : Ti : internal electron donor is 1-200 : 20-4000 : 1, and preferably 5-100:50-2000:1.

In the case where the internal electron donor is a combination of the at least one α-cyanosuccinate compound I and the monofunctional or difunctional compound E, the α-cyanosuccinate compound I accounts for 5 mol% to 95 mol% of the combination, preferably 50 mol% to 95 mol% of the combination.

Examples of the magnesium halide MgX₂ in the magnesium halide-alcohol adduct include magnesium dichloride, magnesium dibromide, and mixtures thereof, with magnesium dichloride being preferred. Examples of the alcohol ROH in the magnesium halide-alcohol adduct include methanol, ethanol, propanol, isopropanol, n-butanol, isobutanol, pentanol, isopentanol, n-hexanol, n-octanol, 2-ethylhexanol, ethylene glycol, and propylene glycol.

The magnesium halide-alcohol adduct of the formula (II) can be prepared by processes known in the art for preparing magnesium halide-alcohol adducts, such as spray drying process, spray cooling process, high-pressure extruding process, or high-speed stirring process.

In an embodiment, the magnesium halide-alcohol adduct of the formula (II) can be prepared by a process comprising the steps of: adding the magnesium halide MgX₂, the alcohol ROH and an optional inert liquid medium to a closed vessel; allowing the contents to contact and react with each other under heating condition, with the final reaction temperature being high enough to molten the magnesium halide-alcohol adduct to form a melt, preferably reaching 100 to 140 °C, thereby forming a mixture containing the molten magnesium halide-alcohol adduct; applying high shearing action on the mixture containing the molten magnesium halide-alcohol adduct; and then discharging the sheared mixture into a cooling medium to solidify the melt by quench, to form spherical magnesium halide-alcohol adduct particles. The application of the high shearing action may be accomplished by a conventional method, such as by a high-speed stirring process (see, for example, CN 1330086) or a spraying process (see, for example, US 6,020,279), or through a super-gravity rotary bed (see, for example, CN 1580136A) or an emulsification apparatus (see, for example, CN 1463990A). The inert liquid medium is generally an inert liquid aliphatic hydrocarbon solvent, such as kerosene, paraffin oil, vaseline oil, white oil and when necessary, contains optionally some amount of an organic silicon compound or an surfactant, such as dimethyl silicone oil. The cooling medium may be an inert hydrocarbon solvent having a relatively low boiling point, such as pentane, hexane, heptane, gasoline, petroleum ether and may be controlled at a temperature of from -40 °C to 0 °C, preferably from -40 °C to -20 °C, prior to its contacting with the magnesium halide-alcohol adduct melt.

The solid catalyst component according to this subaspect may be prepared by reacting the particulate magnesium halide-alcohol adduct with the titanium compound and the internal electron donor.

In an embodiment, the solid catalyst component according to this subaspect may be prepared by a process comprising the steps of
(i) suspending the magnesium halide-alcohol adduct in the titanium compound or a mixture of the titanium compound and an inert solvent, which is chilled generally to a temperature ranging from -30°C to 0°C, and preferably from -20°C to -10°C;
(ii) heating the above suspension to a temperature ranging from 40°C to 130°C, and preferably from 60°C to 120°C, and maintaining the temperature for 0.5 to 2.0 hours;
(iii) recovering a solid component through filtration; and
(iv) optionally, treating the recovered solid component with the titanium compound and the inert solvent one or more times, and preferably 1 to 3 times,
wherein the internal electron donor is added in one or more portions at any time of steps (i) and (ii), and preferably when the suspension is heated to a temperature ranging from 0°C to 60°C.

The inert solvent is preferably an aliphatic hydrocarbon or an aromatic hydrocarbon. Examples include hexane, heptane, octane, decane, and toluene.

The internal electron donor comprised in the catalyst component according to the invention is at least one α-cyanosuccinate compound I having the formula (I): 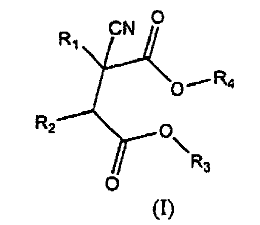 wherein, R₁ and R₂ are independently hydrogen, a C₁-C₁₄ linear or branched alkyl, a C₃-C₁₀ cycloalkyl, a C₆-C₁₀ aryl, a C₇-C₁₀ alkaryl or a C₇-C₁₀ aralkyl; and R₃ and R₄ are independently a C₁-C₁₀ linear or branched alkyl, a C₃-C₁₀ cycloalkyl, a C₆-C₂₀ aryl, a C₇-C₂₀ alkaryl or a C₇-C₂₀ aralkyl,
alternatively, the internal electron donor is a combination of the at least one α-cyanosuccinate compound I and a monofunctional or difunctional compound E chosen from esters other than the α-cyanosuccinate compounds I, ethers, ketones, ketals, amines and silanes.

In a preferred embodiment, in the formula (I), R₁ to R₄ are independently a C₁-C₄ linear or branched alkyl or a C₃-C₆ cycloalkyl.

In a preferred embodiment, in the formula (I), R₁ are R₂ are independently methyl, ethyl, n-propyl, isopropyl, cyclopentyl or cyclohexyl; and R₃ are R₄ are independently methyl, ethyl, n-butyl or 2- methyl propyl.

In a preferred embodiment, in the formula (I), R₁ and R₂ are independently methyl, ethyl, n-propyl, isopropyl, n-butyl, isobutyl, n-pentyl, isopentyl, n-hexyl, cyclopentyl, cyclohexyl, phenyl, benzyl, p-methylphenylmethyl, or phenylethyl; and R₃ and R₄ are independently methyl, ethyl, n-propyl, isopropyl, n-butyl, isobutyl, phenyl, p-methylphenyl, o-methylphenyl, m-methyl phenyl, or benzyl.

Examples of the α-cyanosuccinate compounds of the formula (I) include diethyl 2,3-diisopropyl-2-cyanosuccinate, di-n-butyl 2,3-diisopropyl -2-cyanosuccinate, diisobutyl 2,3-diisopropyl-2-cyanosuccinate, diethyl 2,3-dicyclopentyl -2-cyanosuccinate, di-n-butyl 2,3-dicyclopentyl-2-cyanosuccinate, diisobutyl 2,3-dicyclopentyl-2-cyanosuccinate, diethyl2,3-dicyclohexyl-2-cyanosuccinate, di-n-butyl 2,3-dicyclohexyl-2-cyanosuccinate, diisobutyl 2,3-dicyclohexyl-2-cyanosuccinate, diethyl 2-cyclopentyl-3-isopropyl-2-cyanosuccinate, 2,3-diisopropyl-2-cyanosuccinic acid 1-isobutyl ester 4-ethyl ester, 2,3-diisopropyl-2-cyanosuccinic acid 1-n-butyl ester 4-ethyl ester, diethyl 2-isopropyl-3-methyl-2-cyanosuccinate, diethyl 3-ethyl-2-isopropyl -2-cyanosuccinate, diethyl 2-isopropyl-3-propyl-2-cyanosuccinate, diethyl 3-butyl-2- isopropyl-2-cyanosuccinate, diethyl 2-isopropyl-3-phenyl-2-cyanosuccinate, diethyl 2-cyclohexyl-3-isopropyl-2-cyanosuccinate, and 2-isopropyl-3-phenyl-2-cyanosuccinic acid 1-ethyl ester 4-isobutyl ester.

Especially preferably, the α-cyanosuccinate compound is represented by the formula (III): 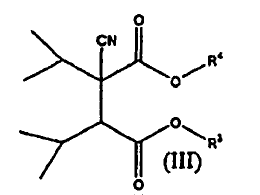 where R₃ and R₄ are the same, and are methyl, ethyl, butyl or isobutyl.

The α-cyanosuccinate compounds of the formula (I) may be prepared through processes known per se. For example, literatures J. Am. Chem. Soc. 1952, 74, 1056-1059 and Bull. Soc. Chim. Fr. 1975, (9-10, Pt. 2), 2189-2194 disclose a process comprising alkylating a 3-alkyl-2-cyanosuccinate compound with 3 equivalent of a bromoalkane or an iodoalkane, to prepare a 2,3-dialkyl-2-cyanosuccinate compound. Chinese patent application No. 20091077779.6 (CN101811983) discloses a process for the preparation of 2,3-diisopropyl-2-cyanosuccinate compounds of the formula (III), comprising reacting a 2-isopropyl-2-cyanoacetate with a metal alkoxide in an alcohol solvent; removing the alcohol solvent to give a concentrate; and reacting the concentrate with 2-bromo-2-isopropylacetate in an aprotic solvent. These processes demonstrate that the α-cyanosuccinate compounds of the formula (I) may be more easily prepared in industrial scale than 2,3-dihydrocarbylsuccinate compounds. In particular, the preferred 2,3-diisopropyl-2-cyanosuccinate compounds of the formula (III) may be more easily prepared in industrial scale than the known 2,3-diisopropylsuccinate compounds.

As mentioned above, the internal electron donor may be a combination of the at least one α-cyanosuccinate compound I and a monofunctional or difunctional compound E chosen from esters other than the α-cyanosuccinate compound I, ethers, ketones, ketals, amines and silanes. The monofunctional or difunctional compound E is preferably chosen from esters of mono- and poly-carboxylic acids, diether compounds, and difunctional compounds containing both an ether group and an ester group.

Preferred esters of mono- and poly-carboxylic acids include benzoates, phthalates, malonates (for example, 2,2-dihydrocarbyl malonates), succinates (for example, 2,3-dihydrocarbyl succinates), glutarates, phthalayes, pivalates, adipates, sebacates, maleates, naphthalene dicarboxylates, trimellitates, benzene-1,2,3-tricarboxylates, pyromellitates and carbonates. Examples include ethyl benzoate, diethyl phthalate, di-iso-butyl phthalate, di-n-butyl phthalate, di-iso-octyl phthalate, di-n-octyl phthalate, diethyl malonate, dibutyl malonate, diisobutyl malonate, diethyl 2,3-di-isopropylsuccinate, di-isobutyl 2,3-di-isopropylsuccinate, diethyl 2,2-diisobutyl malonate, di-n-butyl 2,2-di-isobutyl malonate, di-isobutyl 2,2-diisobutyl malonate, di-n-butyl 2,3-diisopropylsuccinate, dimethyl 2,3-di-isopropylsuccinate, di-iso-butyl 2,2-dimethylsuccinate, di-iso-butyl 2-ethyl-2-methylsuccinate, diethyl 2-ethyl-2-methylsuccinate, diethyl adipate, dibutyl adipate, diethyl sebacate, dibutyl sebacate, diethyl maleate, di-n-butyl maleate, diethyl naphthalene dicarboxylate, dibutyl naphthalene dicarboxylate, triethyl trimellitate, tributyl trimellitate, triethyl benzene-1,2,3-tricarboxylate, tributyl benzene-1,2,3-tricarboxylate, tetraethyl pyromellitate, tetrabutyl pyromellitate Among these, esters of aromatic carboxylic acids and esters of aliphatic dicarboxylic acids are preferred, and diisobutyl phthalate and di-n-butyl phthalate are particularly preferred.

Preferred diether compounds are 1 ,3-diether compounds of the formula (IV): 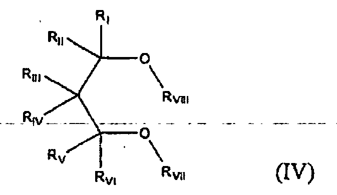 wherein R_{I}, R_{II}, R_{III}, R_{IV}, R_{V}, and R_{VI} are independently chosen from hydrogen, halogen, linear and branched C₁-C₂₀ alkyl groups, C₃-C₂₀ cycloalkyl groups, C₆-C₂₀ aryl groups, C₇-C₂₀ alkaryl groups, and C₇-C₂₀ aralkyl groups, R_{III} and R_{IV} are optionally linked to each other to form a ring; R_{VII} and R_{VIII} are independently chosen from linear and branched C₁-C₂₀ alkyl groups and C₃-C₂₀ cycloalkyl groups. Examples of the 1,3-diether compound include 9,9-bis(methoxymethyl)fluorene and 2-isopentyl-2-isopropyl-1,3-dimethoxypropane.

Examples of the difunctional compound containing both an ether group and an ester group include *o*-alkoxybenzoates, *m*-alkoxybenzoates, and *p*-alkoxybenzoates. The preferred are *o*-methoxybenzoates, such as ethyl *o*-methoxybenzoate, propyl *o*-methoxybenzoate, isopropyl *o*-methoxybenzoate, *n*-butyl *o*-methoxybenzoate, and isobutyl *o*-methoxybenzoate .

In a second aspect, the present invention provides a catalyst for the polymerization of an olefin of formula CH₂=CHR⁶, in which R⁶ is hydrogen or an alkyl having 1 to 6 carbon atoms, comprising a reaction product of the following components:
(1) the solid catalyst component according to the invention;
(2) an alkylaluminum compound as a cocatalyst; and
(3) optionally, an external electron donor compound.

Alkyl aluminum compounds useful as cocatalyst are well known to a person skilled in the art. The alkyl aluminum compounds are preferably those represented by general formula AIR⁷₃₋ₐX¹ₐ, in which R⁷ is independently hydrogen or a C₁-C₂₀ hydrocarbyl, and especially a C₁-C₈ alkyl; X is independently a halogen, and especially chloride; and a has a value ranging from 0 to 2. Examples of the alkyl aluminum compound include trialkyl aluminums, such as trimethyl aluminum, triethyl aluminum, triisobutyl aluminum, tri-n-butyl aluminum, tri-n-hexyl aluminum, trioctyl aluminum; alkyl aluminum hydrides, such as diethyl aluminum hydride, diisobutyl aluminum hydride; and alkyl aluminum chlorides, such as diethyl aluminum chloride, di-isobutyl aluminum chloride, ethyl aluminum sesquichloride, ethyl aluminum dichloride, with triethyl aluminum and triisobutyl aluminum being preferred. The alkyl aluminum compound is generally used in such an amount that a molar ratio of aluminum therein to titanium in the solid catalyst component (1) ranges from 5 to 5000, and preferably from 50 to 1000.

The optional external electron donor compound may be at least one of those well-known by a person skilled in the art. Preferred external electron donor compounds useful in the invention include carboxylic anhydrides, carboxylic esters, ketones, ethers, lactones, organophosphorus compounds and organic silicon compounds, with the organic silicon compounds being preferred. If used, the external electron donor compound is used in an amount ranging from 0.005 to 0.5 moles, preferably from 0.01 to 0.25 moles, and more preferably from 0.02 to 0.1 moles, relative to one mole of the alkyl aluminum compound.

Preferred external electron donor compounds include silicon compounds of formula R⁸ₐR⁹_{b}Si(OR¹⁰)_{c,} wherein a and b are independently an integer ranging from 0 to 2, c is an integer ranging from 1 to 3, and the sum of (a+b+c) is 4; R⁸, R⁹ and R¹⁰ are independently a C₁-C₁₈ hydrocarbyl, and preferably a C₁-C₄ linear or branched alkyl or a C₅-C₆ cycloalkyl, optionally containing heteroatom(s). Among these silicon compounds, those wherein a is 1, b is 1, c is 2, at least one of R⁸ and R⁹ is a branched alkyl, alkenyl, alkylene, cycloalkyl or aryl having 3 to 10 carbon atoms and optionally containing heteroatom(s), and R¹⁰ is a C₁-C₁₀ alkyl, especially methyl, are particularly preferred. Examples of such silicon compounds include cyclohexyl methyl dimethoxy silane, diisopropyl dimethoxy silane, di-n-butyl dimethoxy silane, di-iso-butyl dimethoxy silane, diphenyl dimethoxy silane, methyl tert-butyl dimethoxy silane, dicyclopentyl dimethoxy silane, 2-ethylpiperidino tert-butyl dimethoxy silane, 1,1,1-trifluoro-2-propyl 2-ethylpiperidino dimethoxy silane and 1,1,1-trifluoro-2-propyl methyl dimethoxy silane. Additionally, those silicon compounds wherein a is 0, c is 3, R⁹ is a branched alkyl or cycloalkyl optionally containing heteroatom(s), and R¹⁰ is methyl are also preferred. Examples of such silicon compounds include cyclohexyl trimethoxy silane, tert-butyl trimethoxy silane and tert-hexyl trimethoxy silane.

Preferred external electron donor compounds include also the aforementioned 1,3-diether compounds of the formula (IV), among which 2-isopentyl-2-isopropyl-1,3-dimethoxypropane and 9,9-bis(methoxymethyl)fluorene are particularly preferred.

The alkyl aluminum compound (2) and the optional external electron donor compound (3) can contact and react with the active component (1) separately or as a mixture.

The above catalyst is useful in the polymerization of olefin CH₂=CHR⁶ (wherein R⁶ is H or an alkyl having 1 to 6 carbon atoms) or a feed containing said olefin and a small amount of diene, if necessary.

Thus, in a third aspect, the present invention provides a process for polymerizing olefin(s), comprising contacting an olefin of formula CH₂=CHR⁶, wherein R⁶ is hydrogen or an alkyl having I to 6 carbon atoms, optionally another kind of said olefin as a comonomer, and optionally a diene as a second comonomer, with the catalyst of the invention under polymerization conditions; and recovering the resulting polymer.

The polymerization of olefin(s) may be carried out in liquid phase of liquid monomer or a solution of monomer in an inert solvent, or in gas phase, or in a combination of gas phase and liquid phase, according the known processes. The polymerization is generally carried out at a temperature of from 0°C to 150°C, and preferably from 60°C to 100°C, and at normal or higher pressure. In the polymerization, hydrogen as a regulator of polymer molecular weight may be added to the polymerization reactor to adjust the molecular weight and melt index of a polymer.

When used in olefin polymerization, in particular in propylene polymerization, the solid catalyst components according to the invention, which comprise the α-cyanosuccinate of the formula (I) as internal electron donor, exhibit good catalytic activities and good hydrogen response, and the resultant polymers have higher isotactic indices and broader molecular weight distribution. Due to its easy synthesis, the α-cyanosuccinate of the formula (I) can be obtained at lower cost, and thus imposes additional benefit to the catalysts of the invention.

### Examples

The following examples are provided to further illustrate the present invention.

### Testing methods:

1. Melt index of polymers: measured according to ASTM D1238-99, at 230°C and 2.16kg load.
2. Isotacticity of polymers: measured by heptane extraction method carried out as follows: 2 g of dry polymer sample was extracted with boiling heptane in an extractor for 6 hours, then the residual substance was dried to constant weight, and the ratio of the weight of the residual polymer (g) to 2 (g) was regarded as isotacticity.
3. Molecular weight and molecular weight distribution (MWD=Mw/Mn) of polymers: measured by GPC process carried out on PL-GPC220, solvent: trichlorobenzene, temperature: 150°C, standard sample: polystyrene, flow rate: 1.0ml/min, column: 3 x Plgel 10µm MIXED-B 300x7.5mm.
4. IR spectrum analysis of solid catalyst components: A sample was ground under nitrogen atmosphere in liquid paraffin to give a paste, and then the paste was sandwiched between potassium bromide sheets and analyzed. The IR spectra were acquired on Nicolet Nexus 470 Fourier transform infrared spectrometer from Thermo Fisher Scientific Inc., USA, with the scanning times being 16 and the resolution power being 4.
5. Wavelength dispersive X-ray fluorescence spectrum (WDXRF) analysis of solid catalyst components: performed on PW4400/40 of Sequential Spectrometer System AXIOS from PANalytical B. V., Netherlands.

In the examples, the following propylene polymerization procedures were used:
Propylene polymerization procedure 1:
   At room temperature, to a 5L autoclave, in which air had been completely replaced with gaseous propylene, were added with 5 ml of a 0.5M solution of triethyl aluminum in hexane, 1.25 ml of a 0.1M solution of cyclohexyl methyl dimethoxy silane (CHMMS) in hexane, and 10mg of a solid catalyst component suspended in 10ml of hexane. Then to the autoclave were introduced with 1L (standard volume) of hydrogen gas and 2.3L of liquid propylene, and the contents were heated to 70°C within 10min with stirring. Polymerization was allowed to continue for 1 hour at 70°C. The autoclave was cooled and then the pressure was vented. The autoclave was opened and PP resin was recovered.
Propylene polymerization procedure II:
   Propylene polymerization was carried out in the same manner as described in the propylene polymerization procedure I, except that the amount of the hydrogen gas was changed to 6L (standard volume).

### Example 1

To a reactor, in which air had been repeatedly replaced with high pure N₂, were charged successively with 4.8 g of anhydrous magnesium dichloride, 95 ml of toluene, 4 ml of epoxy chloropropane, and 12.5 ml of tributyl phosphate (TBP). The reaction mixture was heated with stirring to 50°C and maintained at that temperature for 2.5 hours to dissolve the solids. To the reactor was added with 1.4 g of phthalic anhydride, and the reaction mixture was allowed to react for 1 hour and then cooled to -25°C. 56 milliliters of TiCl₄ were added dropwise thereto within 1 hour, then the reaction mixture was heated slowly to 80°C over 2 hours, and particulate solids precipitated gradually during the heating. 5 mmol of diethyl 2,3-diisopropyl-2-cyanosuccinate was added to the reactor, the reaction mixture was maintained at 80°C for 1 hour, and then the mother liquid was filtered off. The residual solids were washed with toluene (70 ml x 2). 40 milliliters of titanium tetrachloride and 60 milliliters of toluene were added thereto, the reaction mixture was stirred at 100°C for 2 hours, and then the mother liquid was filtered off. The titanium tetrachloride treatment was repeated once. The solids were washed with boiling toluene (60 ml x 3), boiling hexane (60 ml x 2), and hexane at ambient temperature (60 ml x 2), and then dried under vacuum, to give a solid titanium-containing catalyst component.

IR spectrum data of the solid catalyst component (cm⁻¹): 2291, 1862, 1698, 1460, 1377, 1298, 1013.

WDXRF analysis results of the solid catalyst component: Mg: 23.7wt%, Cl: 74.5wt%, Ti: 1.6wt%, and other elements: the balance.

Propylene polymerization was carried out according to the propylene polymerization procedure I. The results are shown in Table 1 below.

### Comparative Example 1

A solid catalyst component was prepared according to the procedure described in Example 1, except that the diethyl 2,3-diisopropyl-2-cyanosuccinate (5 mmol) was replaced with diisobutyl phthalate (5 mmol).

IR spectrum data of the solid catalyst component (cm⁻¹): 1860, 1686, 1460, 1378, 1084.

WDXRF analysis results of the solid catalyst component: Mg: 25.2wt%, Cl: 72.9wt%, Ti: 1.8wt%, and other elements: the balance.

Propylene polymerization was carried out according to the propylene polymerization procedure I. The results are shown in Table 1.

### Example 2

A solid catalyst component was prepared according to the procedure described in Example 1, except that the diethyl 2,3-diisopropyl-2-cyanosuccinate (5 mmol) was replaced with 2,3-diisopropyl-2-cyanosuccinic acid 1-isobutyl ester 4-ethyl ester (5 mmol).

Two propylene polymerizations were carried out according to the propylene polymerization procedure I and II, respectively. The results are shown in Table 1.

### Example 3

A solid catalyst component was prepared according to the procedure described in Example 1, except that the diethyl 2,3-diisopropyl-2-cyanosuccinate (5 mmol) was replaced with diethyl 2-isopropyl-3-methyl-2-cyanosuccinate (5 mmol).

Propylene polymerization was carried out according to the propylene polymerization procedure I. The results are shown in Table 1.

### Example 4

A solid catalyst component was prepared according to the procedure described in Example 1, except that the diethyl 2,3-diisopropyl-2-cyanosuccinate (5 mmol) was replaced with diethyl 3-ethyl-2-isopropyl-2-cyanosuccinate (5 mmol).

Propylene polymerization was carried out according to the propylene polymerization procedure I. The results are shown in Table 1.

### Example 5

A solid catalyst component was prepared according to the procedure described in Example 1, except that the diethyl 2,3-diisopropyl-2-cyanosuccinate (5 mmol) was replaced with diethyl 3-isopropyl-2-cyclopentyl-2-cyanosuccinate (5 mmol).

Propylene polymerization was carried out according to the propylene polymerization procedure I. The results are shown in Table 1.

### Example 6

A solid catalyst component was prepared according to the procedure described in Example 1, except that the diethyl 2,3-diisopropyl-2-cyanosuccinate (5 mmol) was replaced with diethyl 2,3-diisopropyl-2-cyanosuccinate (2.5 mmol) and diisobutyl phthalate (2.5 mmol).

WDXRF analysis results of the solid catalyst component: Mg: 26.8wt%, Cl: 71.6wt%, Ti: 1.3wt%, and other elements: the balance.

IR spectrum data of the solid catalyst component (cm⁻¹): 2286, 1860, 1694, 1460, 1377, 1314, 1154, 1082.

Two propylene polymerizations were carried out according to the propylene polymerization procedure I and II, respectively. The results are shown in Table 1.

### Example 7

A solid catalyst component was prepared according to the procedure described in Example 1, except that the diethyl 2,3-diisopropyl-2-cyanosuccinate (5 mmol) was replaced with diethyl 2,3-diisopropyl-2-cyanosuccinate (2.5 mmol) and 9,9-bis(methoxymethyl)fluorene (2.5 mmol).

IR spectrum data of the solid catalyst component (cm⁻¹): 2340, 1858, 1684, 1460, 1377, 1316, 1296, 1083.

Two propylene polymerizations were carried out according to the propylene polymerization procedure I and II, respectively. The results are shown in Table 1.

### Example 8

A solid catalyst component was prepared according to the procedure described in Example 1, except that the diethyl 2,3-diisopropyl-2-cyanosuccinate (5 mmol) was replaced with di-n-butyl 2,3-diisopropyl-2-cyanosuccinate (5 mmol).

IR spectrum data of the solid catalyst component (cm⁻¹)- 2290, 1862, 1698, 1460, 1377, 1295, 1268, 1053.

Two propylene polymerizations were carried out according to the propylene polymerization procedure I and II, respectively. The results are shown in Table 1.

### Comparative Example 2

A solid catalyst component was prepared according to the procedure described in Example 1, except that the diethyl 2,3-diisopropyl-2-cyanosuccinate (5 mmol) was replaced with ethyl 2-isopropyl-2-cyanoacetate (5 mmol).

IR spectrum data of the solid catalyst component (cm⁻¹): 2294, 1863, 1701, 1460, 1377, 1316, 1269, 1037.

Two propylene polymerizations were carried out according to the propylene polymerization procedure I and II, respectively. The results are shown in Table 1.

**Table 1 Performance of the Catalysts**

| Example No. | Polymerization Procedure | Polymerization Activity (kgPP/gcat.) | Polymer Isotacticity (%) | Polymer Melt Index (g/10min) | MWD |
|---|---|---|---|---|---|
| Example 1 | I | 17.6 | 97.8 | 3.7 | 10.6 |
| Comparative Example 1 | I | 19.3 | 98.3 | 27.6 | 5.6 |
| Example 2 | I | 23.0 | 97.5 | 1.8 | 8.8 |
| | II | 19.0 | 97.5 | 4.0 | 9.9 |
| Example 3 | I | 1.4 | 90.7 | 89.3 | 7.7 |
| Example 4 | I | 3.6 | 93.0 | 52.4 | 9.4 |
| Example 5 | I | 9.6 | 96.1 | 4.4 | 11.9 |
| Example 6 | I | 16.4 | 97.4 | 4.1 | 9.5 |
| | II | 11.4 | 97.6 | 25.2 | 8.6 |
| Example 7 | I | 16.0 | 97.4 | 15.4 | 6.1 |
| | II | 10.5 | 96.7 | 42.4 | 5.7 |
| Example 8 | I | 48.2 | 96.4 | 3.3 | 9.6 |
| | II | 14.6 | 95.4 | 10.7 | 10.0 |
| Comparative Example 2 | I | 3.8 | 87.8 | 38.4 | 9.0 |
| | II | 3.0 | 87.5 | 45.9 | 9.3 |

It can be seen from the data shown in Table 1 that the catalysts of the inventive examples exhibit good performance, including activities for propylene polymerization comparable to that of the known catalysts comprising diisobutyl phthalate as an internal electron donor, good hydrogen response, higher polymer isotacticities, and broader polymer molecular weight distribution.

### Example 9

A spherical magnesium dichloride-alcohol adduct of formula MgX₂•(ROH)ₘ, wherein X=Cl, R=C₂H₅, and m=2.4, was prepared according to the process described in Example 1 of Chinese patent application CN1091748A.

To a 300ml jacketed glass reactor was charged with 100ml of titanium tetrachloride, and the contents were cooled to -20°C. 8 g of the above spherical magnesium dichloride-alcohol adduct was added thereto, and the contents were heated to 100°C, with 5 mmol of diethyl 2,3-diisopropyl-2-cyanosuccinate being added thereto during the heating. The reaction mixture was maintained at 100°C for 1 hour, and then the liquid was filtered off. The residual solids were washed with titanium tetrachloride twice and with hexane four times, and then dried under vacuum, to give a spherical solid catalyst component.

IR spectrum data of the solid catalyst component (cm⁻¹): 2291, 1704, 1460, 1378, 1298, 1266, 1007.

WDXRF analysis results of the solid catalyst component: Mg: 22.9wt%, Cl: 73.8wt%, Ti: 3.1wt%, other elements: the balance.

Two propylene polymerizations were carried out according to the propylene polymerization procedure I and II, respectively. The results are shown in Table 2 below.

### Comparative Example 3

A spherical solid catalyst component was prepared according to the procedure described in Example 9, except that the diethyl 2,3-diisopropyl-2-cyanosuccinate was replaced with diisobutyl phthalate (5 mmol).

IR spectrum data of the solid catalyst component (cm⁻¹): 1860, 1687, 1460, 1377, 1083.

WDXRF analysis results of the solid catalyst component: Mg: 23.4wt%, Cl: 74.5wt%, Ti: 2.0wt%, and other elements: the balance.

Two propylene polymerizations were carried out according to the propylene polymerization procedure I and II, respectively. The results are shown in Table 2.

### Example 10

A spherical solid catalyst component was prepared according to the procedure described in Example 9, except that the diethyl 2,3-diisopropyl-2-cyanosuccinate was replaced with diethyl 2-isopropyl-3-methyl-2-cyanosuccinate (5 mmol).

IR spectrum data of the solid catalyst component (cm⁻¹): 2287, 1697, 1459, 1377, 1311, 1243, 1008.

WDXRF analysis results of the solid catalyst component: Mg: 22.7wt%, Cl: 74.7wt%, Ti: 2.2wt%, and other elements: the balance.

Two propylene polymerizations were carried out according to the propylene polymerization procedure I and II, respectively. The results are shown in Table 2.

### Example 11

A spherical solid catalyst component was prepared according to the procedure described in Example 9, except that the diethyl 2,3-diisopropyl-2-cyanosuccinate was replaced with diethyl 3-ethyl-2-isopropyl-2-cyanosuccinate (5 mmol).

IR spectrum data of the solid catalyst component (cm⁻¹): 2289, 1699, 1463, 1378, 1321, 1235, 1004.

WDXRF analysis results of the solid catalyst component: Mg: 19.0wt%, Cl; 77.6wt%, Ti: 3.2wt%, and other elements: the balance.

Two propylene polymerizations were carried out according to the propylene polymerization procedure I and II, respectively. The results are shown in Table 2.

### Example 12

A spherical solid catalyst component was prepared according to the procedure described in Example 9, except that the diethyl 2,3-diisopropyl-2-cyanosuccinate was replaced with 2-isopropyl-3-phenyl-2-cyanosuccinic acid 1-ethyl ester 4-isobutyl ester (5 mmol).

IR spectrum data of the solid catalyst component (cm⁻¹): 2287, 1684, 1637, 1459, 1377, 1313, 1155, 1007.

WDXRF analysis results of the solid catalyst component: Mg: 20.4wt%, Cl: 76.0wt%, Ti: 3.4wt%, and other elements: the balance.

Propylene polymerization was carried out according to the propylene polymerization procedure I. The results are shown in Table 2.

### Comparative Example 4

A spherical solid catalyst component was prepared according to the procedure described in Example 9, except that the diethyl 2,3-diisopropyl-2-cyanosuccinate was replaced with diethyl 2,3-diisopropyl succinate (5 mmol).

IR spectrum data of the solid catalyst component (cm⁻¹): 1690, 1463, 1377, 1317, 1262, 1010.

WDXRF analysis results of the solid catalyst component: Mg: 23.4 wt %, Cl: 74.1 wt %, Ti: 2.3 wt %, and other elements: the balance.

Two propylene polymerizations were carried out according to the propylene polymerization procedure I and II, respectively. The results are shown in Table 2.

### Comparative Example 5

A spherical solid catalyst component was prepared according to the procedure described in Example 9, except that the diethyl 2,3-diisopropyl-2-cyanosuccinate was replaced with ethyl 2-isopropyl-2-cyanoacetate (5 mmol).

IR spectrum data of the solid catalyst component (cm⁻¹): 2295, 1705, 1460, 1378, 1319, 1245, 1016.

WDXRF analysis results of the solid catalyst component: Mg: 24.8 wt %, Cl: 73.0 wt %, Ti: 2.1 wt %, and other elements: the balance.

Two propylene polymerizations were carried out according to the propylene polymerization procedure I and II, respectively. The results are shown in Table 2.

### Comparative Example 6

A spherical solid catalyst component was prepared according to the procedure described in Example 9, except that the diethyl 2,3-diisopropyl-2-cyanosuccinate was replaced with diethyl 2,3-diisopropyl -2,3-dicyanosuccinate (5 mmol).

Propylene polymerization was carried out according to the propylene polymerization procedure I. The results are shown in Table 2.

### Example 13

A spherical solid catalyst component was prepared according to the procedure described in Example 9, except that the diethyl 2,3-diisopropyl-2-cyanosuccinate was replaced with di-isobutyl 2,3-diisopropyl-2-cyanosuccinate (5 mmol).

IR spectrum data of the solid catalyst component (cm⁻¹): 2286, 1692, 1460, 1377, 1326, 1290, 1169, 1095, 722.

Two propylene polymerizations were carried out according to the propylene polymerization procedure I and II, respectively. The results are shown in Table 2.

### Example 14

A spherical solid catalyst component was prepared according to the procedure described in Example 9, except that the diethyl 2,3-diisopropyl-2-cyanosuccinate was replaced with diethyl 2-cyclopentyl-3-isopropyl-2-cyanosuccinate (5 mmol).

IR spectrum data of the solid catalyst component (cm⁻¹): 2290, 1694, 1460, 1377, 1322, 1262, 1057, 723.

Two propylene polymerizations were carried out according to the propylene polymerization procedure I and II, respectively. The results are shown in Table 2.

### Example 15

A spherical solid catalyst component was prepared according to the procedure described in Example 9, except that the diethyl 2,3-diisopropyl-2-cyanosuccinate was replaced with diethyl 2-cyclohexyl-3-isopropyl-2-cyanosuccinate (5 mmol).

Two propylene polymerizations were carried out according to the propylene polymerization procedure I and II, respectively. The results are shown in Table 2.

**Table 2 Performance of the Catalysts**

| Example No. | Polymerization Procedure | Polymerization Activity (kgPP/gcat.) | Polymer Isotacticity (%) | Polymer Melt Index (g/10min) | MWD |
|---|---|---|---|---|---|
| Example 9 | I | 34.0 | 97.6 | 10.9 | 10.1 |
| | II | 16.7 | 96.9 | 30.6 | 10.5 |
| Comparative Example 3 | I | 35.8 | 97.9 | 10.6 | 5.5 |
| | II | 39.0 | 97.1 | 28.0 | 5.7 |
| Example 10 | I | 13.4 | 95.2 | 24.7 | 6.7 |
| | II | 12.1 | 95.4 | 45.3 | 6.3 |
| Example 11 | I | 12.0 | 96.2 | 26.4 | 7.1 |
| | II | 12.5 | 95.6 | 48.4 | 7.2 |
| Example 12 | I | 13.4 | 90.2 | 40.7 | 7.5 |
| Comparative Example 4 | I | 34.0 | 96.7 | 10.5 | 8.4 |
| | II | 30.4 | 95.8 | 17.3 | 8.4 |
| Comparative Example 5 | I | 10.0 | 89.5 | 33.8 | 8.1 |
| | II | 8.2 | 87.5 | 63.2 | 8.5 |
| Comparative Example 6 | I | 16.6 | 85.3 | 72.2 | / |
| Example 13 | I | 27.0 | 95.8 | 7.1 | 9.2 |
| | II | 33.6 | 95.0 | 12.8 | 10.0 |
| Example 14 | I | 29.0 | 97.0 | 2.1 | 11.1 |
| | II | 33.6 | 96.4 | 14.6 | 13.6 |
| Example 15 | I | 44.9 | 97.0 | 1.9 | 11.7 |
| | II | 42.1 | 95.1 | 19.8 | 12.7 |

It can be seen from the data shown in Table 2 that the catalysts of the inventive examples exhibit good performance, including high activities for propylene polymerization, high isotacticities of the resultant polymers, and broad molecular weight distribution of the polymers. In particular, the polymers obtained by using the catalyst of Example 9, which comprises the preferred diethyl 2,3-diisopropyl-2-cyanosuccinate as an internal electron donor, have molecular weight distribution broader than that of the polymers obtained by using the catalyst of Comparative Example 4, which comprises diethyl 2,3-diisopropyl succinate as an internal electron donor. In addition, the catalyst of Comparative Example 5, which comprises ethyl 2-isopropyl-2-cyanoacetate as an internal electron donor, exhibits lower catalytic activities, and the resultant polymers have lower isotactic indices.

### Example 16

A spherical magnesium dichloride-alcohol adduct of formula MgX₂•(ROH)ₘ, wherein X=Cl, R=C₂H₅, and m=2.4, was prepared according to the process described in Example 1 of Chinese patent application CN1091748A.

To a 300ml jacketed glass reactor was charged with 100ml of titanium tetrachloride, and the contents were cooled to -20°C. 8 g of the above spherical magnesium dichloride-alcohol adduct was added thereto, and the contents were heated to 100°C, with 2.5 mmol of diethyl 2,3-diisopropyl-2-cyanosuccinate and 2.5 mmol of diisobutyl phthalate being added thereto during the heating. The reaction mixture was maintained at 100°C for 1 hour, and then the liquid was filtered off. The residual solids were washed with titanium tetrachloride twice and with hexane four times, and then dried under vacuum, to give a spherical solid catalyst component.

IR spectrum data of the solid catalyst component (cm⁻¹): 2291, 1701, 1459, 1378, 1298, 1008.

WDXRF analysis results of the solid catalyst component: Mg: 22.0wt%, Cl: 75.2 wt %, Ti: 2.7 wt %, and other elements: the balance.

Two propylene polymerizations were carried out according to the propylene polymerization procedure I and II, respectively. The results are shown in Table 3 below.

### Example 17

A spherical solid catalyst component was prepared according to the procedure described in Example 16, except that the diisobutyl phthalate (2.5 mmol) was replaced with 9,9-bis(methoxymethyl)fluorene (2.5 mmol).

IR spectrum data of the solid catalyst component (cm⁻¹): 2286, 1697, 1637, 1460, 1377, 1294, 1009.

WDXRF analysis results of the solid catalyst component: Mg: 21.8 wt %, Cl: 74.8 wt %, Ti: 3.0 wt %, and other elements: the balance.

Two propylene polymerizations were carried out according to the propylene polymerization procedure I and II, respectively. The results are shown in Table 3.

### Example 18

A spherical solid catalyst component was prepared according to the procedure described in Example 16, except that the diisobutyl phthalate (2.5 mmol) was replaced with ethyl 2-methoxybenzoate (2.5 mmol).

IR spectrum data of the solid catalyst component (cm⁻¹): 2290, 1693, 1638, 1458, 1377, 1297, 1008.

WDXRF analysis results of the solid catalyst component: Mg: 22.9 wt %, Cl: 74.2 wt %, Ti: 2.6 wt %, and other elements: the balance.

Two propylene polymerizations were carried out according to the propylene polymerization procedure I and II, respectively. The results are shown in Table 3.

### Example 19

A spherical solid catalyst component was prepared according to the procedure described in Example 16, except that the diisobutyl phthalate (2.5 mmol) was replaced with 2-isopentyl-2-isopropyl-1,3-dimethoxypropane (2.5 mmol).

IR spectrum data of the solid catalyst component (cm⁻¹): 2290, 1693, 1638, 1458, 1377, 1297, 1008.

WDXRF analysis results of the solid catalyst component: Mg: 22.9 wt %, Cl: 74.2 wt %, Ti: 2.6 wt %, and other elements: the balance.

Two propylene polymerizations were carried out according to the propylene polymerization procedure I and II, respectively. The results are shown in Table 3 below.

### Comparative Example 7

A spherical solid catalyst component was prepared according to the procedure described in Comparative Example 3, except that the diisobutyl phthalate was replaced with ethyl 2-methoxybenzoate (5 mmol).

Propylene polymerization was carried out according to the propylene polymerization procedure I. The results are shown in Table 3.

**Table 3 Performance of the Catalysts**

| Example No. | Polymerization Procedure | Polymerization Activity (kgPP/gcat.) | Polymer Isotacticity (%) | Polymer Melt Index (g/10min) | Polymer Molecular Weight Mw (x10⁵) | MWD |
|---|---|---|---|---|---|---|
| Example 16 | I | 42.1 | 96.0 | 11.3 | 3.19 | 10.1 |
| | II | 45.7 | 95.9 | 18.6 | 3.00 | 9.0 |
| Example 17 | I | 56.0 | 95.6 | 9.5 | 3.35 | 8.1 |
| | II | 64.0 | 95.0 | 37.3 | 2.39 | 9.6 |
| Example 18 | I | 29.3 | 97.8 | 0.3 | 7.12 | 13.1 |
| | II | 32.4 | 95.0 | 12.4 | 3.30 | 12.8 |
| Example 19 | I | 46.6 | 97.2 | 6.3 | 4.19 | 11.9 |
| | II | 62.2 | 96.6 | 37.3 | 2.71 | 8.0 |
| Comparative Example 3 | I | 35.8 | 97.9 | 10.6 | 2.35 | 5.5 |
| | II | 39.0 | 97.1 | 28.0 | 2.19 | 5.7 |
| Comparative Example 7 | I | 41.7 | 82.5 | 12.1 | \ | 7.9 |

It can be seen from the data shown in Table 3 that the catalysts of the inventive examples, which comprise a combination of two internal electron donor compounds, exhibit higher activities and good hydrogen response, and the resultant polymers have higher isotacticities and broader molecular weight distribution. The improved performance of the catalysts of the inventive examples will facilitate the preparation of propylene polymers and the development of grades of polymers.

## Claims

1. A solid catalyst component for olefin polymerization, comprising magnesium, titanium, a halogen, and an internal electron donor, wherein the internal electron donor is at least one α-cyanosuccinate compound I having the formula (I): 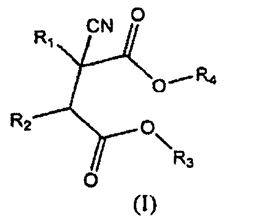 where R₁ and R₂ are independently hydrogen, a C₁-C₁₄ linear or branched alkyl, a C₃-C₁₀ cycloalkyl, a C₆-C₁₀ aryl, a C₇-C₁₀ alkaryl or a C₇-C₁₀ aralkyl; and R₃ and R₄ are independently a C₁-C₁₀ linear or branched alkyl, a C₃-C₁₀ cycloalkyl, a C₆-C₂₀ aryl, a C₇-C₂₀ alkaryl or a C₇-C₂₀ aralkyl,
alternatively, the internal electron donor is a combination of the at least one α-cyanosuccinate compound I and a monofunctional or difunctional compound E chosen from esters other than the α-cyanosuccinate compound I, ethers, ketones, ketals, amines and silanes.

2. The solid catalyst component of claim 1, which is obtained by a process comprising the steps of
(1) dissolving a magnesium halide or a magnesium halide hydrate in a solvent system comprising an organic epoxy compound, an organophosphorus compound and an optional inert diluent, to form a homogeneous solution A;
(2) combining the above homogeneous solution A with a titanium compound and an auxiliary precipitant, to form a mixture B;
(3) precipitating solids C from the mixture B;
(4) separating solids D from the product of step (3); and
(5) treating the solids D with a titanium compound in an inert organic solvent one or more times, to obtain the solid catalyst component,
wherein the internal electron donor is introduced at any stage before the separation of step (4),
wherein the molar ratio of the magnesium halide to the titanium compound to the internal electron donor, used in the process, is 1-200:20-4000:1;
and wherein in the case where the internal electron donor is a combination of the at least one α-cyanosuccinate compound I and the monofunctional or difunctional compound E, the α-cyanosuccinate compound I accounts for 5mol% to 95mol% of the combination.

3. The solid catalyst component of claim 2, wherein the molar ratio of the magnesium halide to the titanium compound to the internal electron donor, used in the process, is 5-100:50-2000:1, and wherein in the case where the internal electron donor is a combination of the at least one α-cyanosuccinate compound I and the monofunctional or difunctional compound E, the α-cyanosuccinate compound I accounts for 50mol% to 95mol% of the combination.

4. The solid catalyst component of claim 1, comprising a reaction product of a magnesium halide-alcohol adduct, a titanium compound and the internal electron donor, wherein the magnesium halide-alcohol adduct is represented by the formula (II):
MgX₂•(ROH)ₘ (II)
wherein X is chlorine or bromine, R is independently a C₁-C₁₂ alkyl, a C₃-C₁₀ cycloalkyl or a C₆-C₁₀ aryl, and m is from 1 to 5.

5. The solid catalyst component of claim 4, wherein in the formula (II), R is independently a C₁-C₄ alkyl, X is chlorine, and m is 1.5 to 3.5.

6. The solid catalyst component of claim 4, wherein the molar ratio of the magnesium halide-alcohol adduct to the titanium compound to the internal electron donor, used in the reaction to form the solid catalyst component, in terms of Mg : Ti : internal electron donor is 1-200 : 20-4000 : 1; and wherein in the case where the internal electron donor is a combination of the at least one α-cyanosuccinate compound I and the monofunctional or difunctional compound E, the α-cyanosuccinate compound I accounts for 5mol% to 95mol% of the combination.

7. The solid catalyst component of claim 6, wherein the molar ratio of the magnesium halide-alcohol adduct to the titanium compound to the internal electron donor, used in the reaction to form the solid catalyst component, in terms of Mg : Ti : internal electron donor is 5-100 : 50-2000 : 1; and wherein in the case where the internal electron donor is a combination of the at least one α-cyanosuccinate compound I and the monofunctional or difunctional compound E, the α-cyanosuccinate compound I accounts for 50mol% to 95mol% of the combination.

8. The solid catalyst component of any of claims 1 to 7, wherein the titanium compound has a formula Ti(OR⁵)₄₋ₙXₙ, wherein R⁵ is independently a C₁-C₂₀ hydrocarbyl, preferably a C₁-C₁₄ aliphatic hydrocarbyl, X is independently F, Cl or Br, and n is an integer ranging from 1 to 4.

9. The solid catalyst component of any of claims 1 to 7, wherein in the formula (I), R₁ to R₄ are independently a C₁-C₄ linear or branched alkyl or a C₃-C₆ cycloalkyl.

10. The solid catalyst component of any of claims 1 to 7, wherein in the formula (I), R₁ and R₂ are independently methyl, ethyl, n-propyl, isopropyl, n-butyl, isobutyl, n-pentyl, isopentyl, n-hexyl, cyclopentyl, cyclohexyl, phenyl, benzyl, p-methylphenylmethyl, or phenylethyl; and R₃ and R₄ are independently methyl, ethyl, n-propyl, isopropyl, n-butyl, isobutyl, phenyl, p-methylphenyl, o-methylphenyl, m-methyl phenyl, or benzyl.

11. The solid catalyst component of any of claims 1 to 7, wherein the α-cyanosuccinate compound I is chosen from diethyl 2,3-diisopropyl-2-cyanosuccinate, di-n-butyl 2,3-diisopropyl-2-cyanosuccinate, diisobutyl 2,3-diisopropyl-2-cyanosuccinate, diethyl 2,3-dicyclopentyl-2-cyanosuccinate, di-n-butyl 2,3-dicyclopentyl-2-cyanosuccinate, diisobutyl 2,3-dicyclopentyl-2-cyanosuccinate, diethyl 2,3-dicyclohexyl-2-cyanosuccinate, di-n-butyl 2,3-dicyclohexyl-2-cyanosuccinate, diisobutyl 2,3-dicyclohexyl-2- cyanosuccinate, diethyl 2-cyclopentyl-3-isopropyl-2,-cyanosuccinate, 2,3-diisopropyl -2-cyanosuccinic acid 1-isobutyl ester 4-ethyl ester, 2,3-diisopropyl-2-cyanosuccinic acid 1-n-butyl ester 4-ethyl ester, diethyl 2-isopropyl-3-methyl-2-cyanosuccinate, diethyl 3-ethyl-2-isopropyl- 2-cyanosuccinate, diethyl 2-isopropyl-3-propyl-2-cyanosuccinate, diethyl 3-butyl-2-isopropyl-2-cyanosuccinate, diethyl 2-isopropyl-3-phenyl -2-cyanosuccinate, diethyl 2-cyclohexyl-3-isopropyl-2-cyanosuccinate, and 2-isopropyl-3-phenyl-2-cyanosuccinic acid 1-ethyl ester 4-isobutyl ester.

12. The solid catalyst component of any of claims 1 to 7, wherein the compound E is chosen from esters of mono- and poly-carboxylic acids, diether compounds, and difunctional compounds containing both an ether group and an ester group.

13. The solid catalyst component of claim 12, wherein the compound E is chosen from 2,2-dihydrocarbyl malonates, 2,3-dihydrocarbyl succinates, glutarates, phthalates, and 1,3-diether compounds represented by the formula (IV): 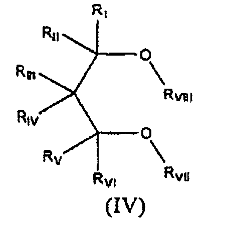 wherein R_{I}, R_{II}, R_{III}, R_{IV}, Rv, and R_{VI} are independently chosen from hydrogen, halogen, linear and branched C₁-C₂₀ alkyl groups, C₃-C₂₀ cycloalkyl groups, C₆-C₂₀ aryl groups, C₇-C₂₀ alkaryl groups, and C₇-C₂₀ aralkyl groups, R_{III} and R_{IV} are optionally linked to each other to form a ring; and R_{VII} and R_{VIII} are independently chosen from linear and branched C₁-C₂₀ alkyl groups and C₃-C₂₀ cycloalkyl groups.

14. The solid catalyst component of claim 13, wherein the 1,3- diether compound is 9,9-bis(methoxymethyl)fluorene or 2-isopentyl-2-isopropyl -1,3-dimethoxypropane.

15. The solid catalyst component of any of claims 1 to 7, wherein the compound E is ethyl o-methoxybenzoate.

16. The solid catalyst component of claim 1, of which IR spectrum has a characteristic absorption peak T in a range of from 2240cm⁻¹ to 2345cm⁻¹.

17. The solid catalyst component of claim 1, of which IR spectrum has a characteristic absorption peak T in a range of from 2240cm⁻¹ to 2295cm⁻¹.

18. A catalyst for the polymerization of an olefin of formula CH₂=CHR, in which R is hydrogen or an alkyl having 1 to 6 carbon atoms, comprising a reaction product of the following components:
(1) the solid catalyst component of any of claims 1 to 17;
(2) an alkyl aluminum compound; and
(3) optionally, an external electron donor compound.

19. The catalyst of claim 18, having at least one of the following features:
- the alkyl aluminum compound is one represented by general formula AIR⁷₃₋ₐX¹ₐ, in which R⁷ is independently hydrogen or a C₁-C₂₀ hydrocarbyl, and especially a C₁-C₈ alkyl; X is independently a halogen, and especially chloride; and a has a value ranging from 0 to 2;
- the alkyl aluminum compound is used in such an amount that a molar ratio of aluminum therein to titanium in the solid catalyst component (1) ranges from 5 to 5000, and preferably from 50 to 1000;
- the external electron donor compound is chosen from carboxylic anhydrides, carboxylic esters, ketones, ethers, lactones, organophosphorus compounds, and organic silicon compounds of formula R⁸ₐR⁹_{b}Si(OR¹⁰)_{c}, wherein a and b are independently an integer ranging from 0 to 2, c is an integer ranging from 1 to 3, and the sum of (a+b+c) is 4; R⁸, R⁹ and R¹⁰ are independently a C₁-C₁₈ hydrocarbyl, and preferably a C₁-C₄ linear or branched alkyl or a C₅-C₆ cycloalkyl, optionally containing heteroatom(s);
- the external electron donor compound is used in an amount ranging from 0.005 to 0.5 moles, preferably from 0.01 to 0.25 moles, and more preferably from 0.02 to 0.1 moles, relative to one mole of the alkyl aluminum compound; and
- the alkyl aluminum compound (2) and the optional external electron donor compound (3) contact and react with the active component (1) separately or as a mixture.

20. A process for polymerizing olefin(s), comprising contacting an olefin of formula CH₂=CHR, wherein R is hydrogen or an alkyl having 1 to 6 carbon atoms, optionally another kind of said olefin as a comonomer, and optionally a diene as a second comonomer, with the catalyst of claim 18 under polymerization conditions; and recovering the resulting polymer.

## Patentansprüche

1. Feste Katalysatorkomponente für die Olefinpolymerisation, umfassend Magnesium, Titan, ein Halogen und einen internen Elektronendonor, worin der interne Elektronendonor zumindest eine α-Cyanosuccinat-Verbindung I mit der Formel (I) ist: 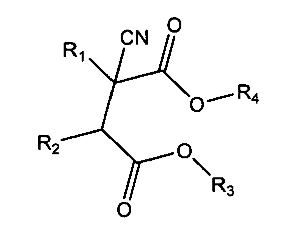 worin R₁ und R₂ jeweils unabhängig Wasserstoff, lineares oder verzweigtes C₁₋₁₄-Alkyl, C₃₋₁₀-Cycloalkyl, C₆₋₁₀-Aryl, C₇₋₁₀-Alkaryl oder C₇₋₁₀-Aralkyl sind; und R₃ und R₄ unabhängig lineares oder verzweigtes C₁₋₁₀-Alkyl, C₃₋₁₀-Cycloalkyl, C₆₋₂₀-Aryl, C₇₋₂₀-Alkaryl oder C₇₋₂₀-Aralkyl sind;
worin alternativ der interne Elektronendonor eine Kombination der zumindest einen α-Cyanosuccinat-Verbindung I und einer monofunktionellen oder bifunktionellen Verbindung E ist, ausgewählt aus anderen Estern als der α-Cyanosuccinat-Verbindung I, Ethern, Ketonen, Ketalen, Aminen und Silanen.

2. Feste Katalysatorkomponente nach Anspruch 1, die erhalten ist durch ein Verfahren, umfassend die Schritte:
(1) Auflösen eines Magnesiumhalogenides oder Magnesiumhalogenidhydrates in einem Lösungsmittelsystem, umfassend eine organische Epoxyverbindung, Organophosphorverbindung und ein wahlweises inertes Verdünnungsmittel, zur Bildung einer homogenen Lösung A;
(2) Kombinieren der obigen homogenen Lösung A mit einer Titanverbindung und einem Hilfsausfällmittel, zur Bildung einer Mischung B;
(3) Ausfällen von Feststoffen C aus der Mischung B;
(4) Trennen von Feststoffen D von dem Produkt von Schritt (3); und
(5) Behandeln der Feststoffe D mit einer Titanverbindung in einem inerten organischen Lösungsmittel ein oder mehrere Male, unter Erhalt der festen Katalysatorkomponente,
worin der interne Elektronendonor bei irgendeiner Stufe vor der Trennung von Schritt (4) eingeführt wird,
worin das molare Verhältnis des Magnesiumhalogenides zu der Titanverbindung zum internen Elektronendonor, die beim Verfahren verwendet werden, 1-200 : 20-4000 : 1 ist; und
worin in dem Fall, wenn der interne Elektronendonor eine Kombination der zumindest einen α-Cyanosuccinat-Verbindung I und der monofunktionellen oder bifunktionellen Verbindung E die α-Cyanosuccinat-Verbindung I 5-95 Mol-% der Kombination ausmacht.

3. Feste Katalysatorkomponente nach Anspruch 2, worin das molare Verhältnis des Magnesiumhalogenides zu der Titanverbindung zum internen Elektronendonor, die beim Verfahren verwendet werden, 5-100 : 50-2000 : 1 ist und worin in dem Fall, wenn der interne Elektronendonor eine Kombination der zumindest einen α-Cyanosuccinat-Verbindung I und der monofunktionellen oder bifunktionellen Verbindung E die α-Cyanosuccinat-Verbindung I 50-95 Mol-% der Kombination ausmacht.

4. Feste Katalysatorkomponente nach Anspruch 1, umfassend ein Reaktionsprodukt eines Magnesiumhalogenid-Alkohol-Adduktes, einer Titanverbindung und des internen Elektronendonors, worin das Magnesiumhalogenid-Alkohol-Addukt durch die Formel (II) dargestellt ist:
MgX₂•(ROH)ₘ (II)
worin X Chlor oder Brom ist, R unabhängig C₁₋₁₂-Alkyl, C₃₋₁₀-Cycloalkyl oder C₆₋₁₀-Aryl ist und m 1 bis 5 ist.

5. Feste Katalysatorkomponente nach Anspruch 4, worin in der Formel (II) R unabhängig C₁₋₄-Alkyl, X Chlor und m 1,5 bis 3,5 ist.

6. Feste Katalysatorkomponente nach Anspruch 4, worin das molare Verhältnis des Magnesiumhalogenid-Alkohol-Adduktes zu der Titanverbindung zu dem internen Elektronendonor, die bei der Reaktion zur Bildung der festen Katalysatorkomponente verwendet sind, ausgedrückt als Mg : Ti : interner Elektronendonor, 1-200 : 20-4000 : 1 ist und worin in dem Fall, wenn der interne Elektronendonor eine Kombination der zumindest einen α-Cyanosuccinat-Verbindung I und der monofunktionellen oder bifunktionellen Verbindung E ist, die α-Cyanosuccinat-Verbindung I 5-95 Mol-% der Kombination ausmacht.

7. Feste Katalysatorkomponente nach Anspruch 6, worin das molare Verhältnis des Magnesiumhalogenid-Alkohol-Adduktes zu der Titanverbindung zu dem internen Elektronendonor, die bei der Reaktion zur Bildung der festen Katalysatorkomponente verwendet sind, ausgedrückt als Mg : Ti : interner Elektronendonor, 5-100 : 50-2000 : 1 ist und worin in dem Fall, wenn der interne Elektronendonor eine Kombination der zumindest einen α-Cyanosuccinat-Verbindung I und der monofunktionellen oder bifunktionellen Verbindung E ist, die α-Cyanosuccinat-Verbindung I 50-95 Mol-% der Kombination ausmacht.

8. Feste Katalysatorkomponente nach einem der Ansprüche 1 bis 7, worin die Titanverbindung die Formel Ti(OR⁵)₄₋ₙXₙ hat, worin R⁵ unabhängig C₁₋₂₀-Hydrocarbyl, bevorzugt ein C₁₋₁₄ aliphatisches Hydrocarbyl ist, X unabhängig F, Cl oder Br ist und n eine ganze Zahl im Bereich von 1 bis 4 ist.

9. Feste Katalysatorkomponente nach einem der Ansprüche 1 bis 7, worin in der Formel(I) R₁ bis R₄ unabhängig lineares oder verzweigtes C₁₋₄-Alkyl oder C₃₋₆-Cycloalkyl sind.

10. Feste Katalysatorkomponente nach einem der Ansprüche 1 bis 7, worin in der Formel (I) R₁ und R₂ unabhängig Methyl, Ethyl, n-Propyl, Isopropyl, n-Butyl, Isobutyl, n-Pentyl, Isopentyl, n-Hexyl, Cyclopentyl, Cyclohexyl, Phenyl, Benzyl, p-Methylphenylmethyl oder Phenylethyl sind; und R₃ und R₄ unabhängig Methyl, Ethyl, n-Propyl, Isopropyl, n-Butyl, Isobutyl, Phenyl, p-Methylphenyl, o-Methylphenyl, m-Methylphenyl oder Benzyl sind.

11. Feste Katalysatorkomponente nach einem der Ansprüche 1 bis 7, worin die α-Cyanosuccinat-Verbindung I ausgewählt ist aus Diethyl-2,3-diisopropyl-2-cyanosuccinat, Di-n-butyl-2,3-diisopropyl-2-cyanosuccinat, Diisobutyl-2,3-diisopropyl-2-cyanosuccinat, Diethyl-2,3-dicyclopentyl-2-cyanosuccinat, Di-n-butyl-2,3-dicyclopentyl-2-cyanosuccinat, Diisobutyl-2,3-dicyclopentyl-2-cyanosuccinat, Diethyl-2,3-dicyclohexyl-2-cyanosuccinat, Di-n-butyl-2,3-dicyclohexyl-2-cyanosuccinat, Diisobutyl-2,3-dicyclohexyl-2-cyanosuccinat, Diethyl-2-cyclopentyl-3-isopropyl-2-cyanosuccinat, 2,3-Diisopropyl-2-cyanosuccinsäure-1-isobutylester-4-ethylester, 2,3-Diisopropyl-2-cyanosuccinsäure-1-n-butylester-4-ethylester, Diethyl-2-isopropyl-3-methyl-2-cyanosuccinat, Diethyl-3-ethyl-2-isopropyl-2-cyanosuccinat, Diethyl-2-isopropyl-3-propyl-2-cyanosuccinat, Diethyl-3-butyl-2-isopropyl-2-cyanosuccinat, Diethyl-2-isopropyl-3-phenyl-2-cyanosuccinat, Diethyl-2-cyclohexyl-3-isopropyl-2-cyanosuccinat und 2-Isopropyl-3-phenyl-2-cyanosuccinsäure-1-ethylester-4-isobutylester.

12. Feste Katalysatorkomponente nach einem der Ansprüche 1 bis 7, worin die Verbindung E ausgewählt ist aus Estern von Mono- und Polycarbonsäuren, Dietherverbindung und bifunktionellen Verbindungen, umfassend sowohl eine Ether- als auch Estergruppe.

13. Feste Katalysatorkomponente nach Anspruch 12, worin die Verbindung E ausgewählt ist aus 2,2-Dihydrocarbylmalonaten, 2,3-Dihydrocarbylsuccinaten, Glutaraten, Phthalaten und 1,3-Diether-Verbindungen, dargestellt durch die Formel (IV): 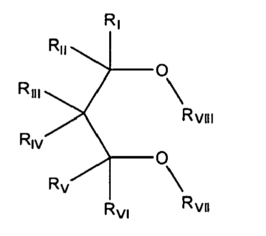 worin R_{I}, R_{II}, R_{III}, R_{IV}, R_{V} und R_{VI} unabhängig ausgewählt sind aus Wasserstoff, Halogen, linearen und verzweigten C₁₋₂₀-Alkylgruppen, C₃₋₂₀-Cycloalkylgruppen, C₆₋₂₀-Arylgruppen, C₇₋₂₀-Alkarylgruppen und C₇₋₂₀-Aralkylgruppen; R_{III} und R_{IV} wahlweise aneinander zur Bildung eines Rings gebunden sind; und R_{VII} und R_{VIII} unabhängig ausgewählt sind aus linearen und verzweigten C₁₋₂₀-Alkylgruppen und C₃₋₂₀-Cycloalkylgruppen.

14. Feste Katalysatorkomponente nach Anspruch 13, worin die 1,3-Dietherverbindung 9,9-Bis(methoxymethyl)fluoren oder 2-Isopentyl-2-isopropyl-1,3-dimethoxypropan ist.

15. Feste Katalysatorkomponente nach einem der Ansprüche 1 bis 7, worin die Verbindung E Ethyl-O-methoxybenzoat ist.

16. Feste Katalysatorkomponente nach Anspruch 1, deren IR-Spektrum einen charakteristischen Absorptionspeak T in einem Bereich von 2240-2345 cm⁻¹ hat.

17. Feste Katalysatorkomponente nach Anspruch 1, deren IR-Spektrum einen charakteristischen Absorptionspeak T in einem Bereich von 2240-2295 cm⁻¹ hat.

18. Katalysator für die Polymerisation eines Olefins der Formel CH₂=CHR, worin R Wasserstoff oder ein Alkyl mit 1 bis 6 Kohlenstoffatomen ist, umfassend ein Reaktionsprodukt der folgenden Komponenten:
(1) feste Katalysatorkomponente nach einem der Ansprüche 1 bis 17;
(2) eine Alkylaluminium-Verbindung und
(3) wahlweise eine externe ElektronendonorVerbindung.

19. Katalysator nach Anspruch 18 mit zumindest einem der folgenden Merkmale:
- die Alkylaluminiumverbindung ist eine, dargestellt durch die allgemeine Formel AIR⁷₃-ₐX¹ₐ, worin R⁷ unabhängig Wasserstoff oder C₁₋₂₀-Hydrocarbyl und insbesondere C₁₋₈-Alkyl ist; X unabhängig Halogen und insbesondere Chlorid ist; und a ein Wert im Bereich von 0 bis 2 ist;
- die Alkylaluminiumverbindung wird in einer solchen Menge verwendet, dass ein molares Verhältnis von Aluminium darin zu Titan in der festen Katalysatorkomponente (I) im Bereich von 5 bis 5000 und bevorzugt 50 bis 1000 liegt;
- die externe Elektronendonorverbindung wird ausgewählt aus Carbonsäureanhydriden, Carbonsäureestern, Ketonen, Ethern, Lactonen, Organophosphorverbindungen und organischen Siliziumverbindungen der Formel R⁸ₐR⁹_{b}Si(OR¹⁰)_{c}, worin a und b unabhängig eine ganze Zahl im Bereich von 0 bis 2 sind, c eine ganze Zahl im Bereich von 1 bis 3 ist und die Summe von (a+b+c) 4 ist; R⁸, R⁹ und R¹⁰ unabhängig C₁₋₁₈-Hydrocarbyl und bevorzugt lineares oder verzweigtes C₁₋₄-Alkyl oder C₅₋₆-Cycloalkyl ist, wahlweise umfassend Heteroatom(e);
- die externe Elektronendonorverbindung wird in einer Menge im Bereich von 0,005 bis 0,5 Mol, bevorzugt 0,01 bis 0,25 Mol und mehr bevorzugt 0,02 bis 0,1 Mol, bezogen auf 1 Mol der Alkylaluminiumverbindung verwendet; und
- die Alkylaluminiumverbindung (2) und die wahlweise externe Elektronendonorverbindung (3) kontaktieren und reagieren mit der aktiven Komponente (1) getrennt oder als eine Mischung.

20. Verfahren zur Polymerisation von Olefin(en), umfassend das Kontaktieren eines Olefins der Formel CH₂=CHR, worin R Wasserstoff oder ein Alkyl mit 1 bis 6 Kohlenstoffatomen ist, wahlweise einer anderen Art des Olefins als ein Comonomer und wahlweise eines Diens als zweites Comonomer mit dem Katalysator nach Anspruch 18 unter Polymerisationsbedingungen; und Wiedergewinnung des resultierenden Polymers.

## Revendications

1. Composant de catalyseur solide pour une polymérisation d'oléfines, comprenant du magnésium, du titane, un halogène, et un donneur d'électrons interne, dans lequel le donneur d'électrons interne est au moins un composé d'α-cyanosuccinate I ayant la formule (I) : 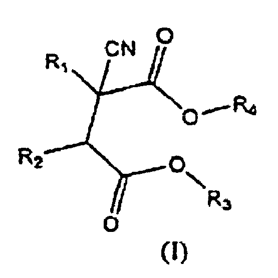 où R₁ et R₂ sont indépendamment un hydrogène, un alkyle linéaire ou ramifié en C₁-C₁₄, un cycloalkyle en C₃-C₁₀, un aryle en C₆-C₁₀, un alkaryle en C₇-C₁₀ ou un aralkyle en C₇-C₁₀; et R₃ et R₄ sont indépendamment un alkyle linéaire ou ramifié en C₁-C₁₀, un cycloalkyle en C₃-C₁₀, un aryle en C₆-C₂₀, un alkaryle en C₇-C₂₀ ou un aralkyle en C₇-C₂₀,
à titre d'alternative, le donneur d'électrons interne est une combinaison de l'au moins un composé d'α-cyanosuccinate I et d'un composé monofonctionnel ou difonctionnel E choisi parmi des esters autres que le composé d'α-cyanosuccinate I, des éthers, des cétones, des cétals, des amines et des silanes.

2. Composant de catalyseur solide selon la revendication 1, qui est obtenu par un procédé comprenant les étapes de
(1) dissolution d'un halogénure de magnésium ou d'un halogénure de magnésium hydraté dans un système de solvant comprenant un composé époxy organique, un composé organophosphoré et un diluant inerte facultatif, pour former une solution homogène A ;
(2) combinaison de la solution homogène A ci-dessus avec un composé de titane et un agent auxiliaire de précipitation, pour former un mélange B ;
(3) précipitation de solides (C) du mélange (B) ;
(4) séparation de solides (D) du produit de l'étape (3) ; et
(5) traitement des solides D avec un composé de titane dans un solvant organique inerte une ou plusieurs fois, pour obtenir le composant de catalyseur solide,
dans lequel le donneur d'électrons interne est introduit à un stade quelconque avant la séparation de l'étape (4),
dans lequel le rapport molaire de l'halogénure de magnésium sur le composé de titane sur le donneur d'électrons interne, utilisé dans le procédé, est 1-200:20-4000:1 ;
et dans lequel, dans le cas où le donneur d'électrons interne est une combinaison de l'au moins un composé d'α-cyanosuccinate I et du composé monofonctionnel ou difonctionnel E, le composé d'α-cyanosuccinate I représente 5% en moles à 95% en moles de la combinaison.

3. Composant de catalyseur solide selon la revendication 2, dans lequel le rapport molaire de l'halogénure de magnésium sur le composé de titane sur le donneur d'électrons interne, utilisé dans le procédé, est 5-100:50-2000:1, et dans lequel, dans le cas où le donneur d'électrons interne est une combinaison de l'au moins un composé d'α-cyanosuccinate I et du composé monofonctionnel ou difonctionnel E, le composé d'α-cyanosuccinate I représente 50% en moles à 95% en moles de la combinaison.

4. Composant de catalyseur solide selon la revendication 1, comprenant un produit de réaction d'un produit d'addition halogénure de magnésium-alcool, un composé de titane et le donneur d'électrons interne, dans lequel le produit d'addition halogénure de magnésium-alcool est représenté par la formule (II) :
MgX₂•(ROH)ₘ (II)
dans laquelle X est un chlore ou un brome, R est indépendamment un alkyle en C₁-C₁₂, un cycloalkyle en C₃-C₁₀ ou un aryle en C₆-C₁₀, et m est de 1 à 5.

5. Composant de catalyseur solide selon la revendication 4, dans lequel, dans la formule (II), R est indépendamment un alkyle en C₁-C₄, X est un chlore, et m est de 1,5 à 3,5.

6. Composant de catalyseur solide selon la revendication 4, dans lequel le rapport molaire du produit d'addition halogénure de magnésium-alcool sur le composé de titane sur le donneur d'électrons interne, utilisé dans la réaction pour former le composant de catalyseur solide, en termes de Mg : Ti : donneur d'électrons interne est 1-200 : 20-4000 : 1 ; et dans lequel, dans le cas où le donneur d'électrons interne est une combinaison de l'au moins un composé d'α-cyanosuccinate I et du composé monofonctionnel ou difonctionnel E, le composé d'α-cyanosuccinate I représente 5% en moles à 95% en moles de la combinaison.

7. Composant de catalyseur solide selon la revendication 6, dans lequel le rapport molaire du produit d'addition halogénure de magnésium-alcool sur le composé de titane sur le donneur d'électrons interne, utilisé dans la réaction pour former le composant de catalyseur solide, en termes de Mg : Ti : donneur d'électrons interne est 5-100 : 50-2000 : 1 ; et dans lequel, dans le cas où le donneur d'électrons interne est une combinaison de l'au moins un composé d'α-cyanosuccinate I et du composé monofonctionnel ou difonctionnel E, le composé d'α-cyanosuccinate I représente 50% en moles à 95% en moles de la combinaison.

8. Composant de catalyseur solide selon l'une quelconque des revendications 1 à 7, dans lequel le composé de titane a une formule Ti(OR⁵)₄₋ₙXₙ, dans laquelle R⁵ est indépendamment un hydrocarbyle en C₁-C₂₀, préférablement un hydrocarbyle aliphatique en C₁-C₁₉, X est indépendamment F, Cl ou Br, et n est un entier dans la plage de 1 à 4.

9. Composant de catalyseur solide selon l'une quelconque des revendications 1 à 7, dans lequel, dans la formule (I), R₁ à R₄ sont indépendamment un alkyle linéaire ou ramifié en C₁-C₄ ou un cycloalkyle en C₃-C₆.

10. Composant de catalyseur solide selon l'une quelconque des revendications 1 à 7, dans lequel, dans la formule (I), R₁ et R₂ sont indépendamment un méthyle, un éthyle, un n-propyle, un isopropyle, un n-butyle, un isobutyle, un n-pentyle, un isopentyle, un n-hexyle, un cyclopentyle, un cyclohexyle, un phényle, un benzyle, un p-méthylphénylméthyle, ou un phényléthyle ; et R₃ et R₄ sont indépendamment un méthyle, un éthyle, un n-propyle, un isopropyle, un n-butyle, un isobutyle, un phényle, un p-méthylphényle, un o-méthylphényle, un m-méthylphényle, ou un benzyle.

11. Composant de catalyseur solide selon l'une quelconque des revendications 1 à 7, dans lequel le composé d'α-cyanosuccinate I est choisi parmi le 2,3-diisopropyl-2-cyanosuccinate de diéthyle, le 2,3-diisopropyl-2-cyanosuccinate de di-n-butyle, le 2,3-diisopropyl-2-cyanosuccinate de diisobutyle, le 2,3-dicyclopentyl-2-cyanosuccinate de diéthyle, le 2,3-dicyclopentyl-2-cyanosuccinate de di-n-butyle, le 2,3-dicyclopentyl-2-cyanosuccinate de diisobutyle, le 2,3-dicyclohexyl-2-cyanosuccinate de diéthyle, le 2,3-dicyclohexyl-2-cyanosuccinate de di-n-butyle, le 2,3-dicyclohexyl-2-cyanosuccinate de diisobutyle, le 2-cyclopentyl-3-isopropyl-2-cyanosuccinate de diéthyle, l'ester 1-isobutylique-ester 4-éthylique de l'acide 2,3-diisopropyl-2-cyanosuccinique, l'ester 1-n-butylique-ester 4-éthylique de l'acide 2,3-diisopropyl-2-cyanosuccinique, le 2-isopropyl-3-méthyl-2-cyanosuccinate de diéthyle, le 3-éthyl-2-isopropyl-2-cyanosuccinate de diéthyle, le 2-isopropyl-3-propyl-2-cyanosuccinate de diéthyle, le 3-butyl-2-isopropyl-2-cyanosuccinate de diéthyle, le 2-isopropyl-3-phényl-2-cyanosuccinate de diéthyle, le 2-cyclohexyl-3-isopropyl-2-cyanosuccinate de diéthyle, et l'ester 1-éthylique-ester 4-isobutylique de l'acide 2-isopropyl-3-phényl-2-cyanosuccinique.

12. Composant de catalyseur solide selon l'une quelconque des revendications 1 à 7, dans lequel le composé E est choisi parmi des esters d'acides mono- et poly-carboxyliques, des composés diéther, et des composés difonctionnels contenant à la fois un groupe éther et un groupe ester.

13. Composant de catalyseur solide selon la revendication 12, dans lequel le composé E est choisi parmi des malonates de 2,2-dihydrocarbyle, des succinates de 2,3-dihydrocarbyle, des glutarates, des phtalates, et des composés 1,3-diéther représentés par la formule (IV) : 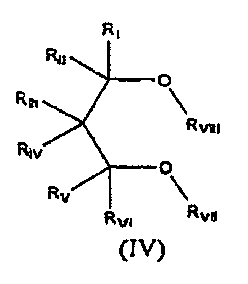 dans laquelle R_{I}, R_{II}, R_{III}, R_{IV}, R_{V}, et R_{VI} sont indépendamment choisis parmi un hydrogène, un halogène, des groupes alkyle en C₁-C₂₀ linéaires et ramifiés, des groupes cycloalkyle en C₃-C₂₀, des groupes aryle en C₆-C₂₀, des groupes alkaryle en C₇-C₂₀, et des groupes aralkyle en C₇-C₂₀, R_{III} et R_{IV} sont facultativement liés l'un à l'autre pour former un cycle ; et R_{VII} et R_{VIII} sont indépendamment choisis parmi des groupes alkyle en C₁-C₂₀ linéaires et ramifiés et des groupes cycloalkyle en C₃-C₂₀.

14. Composant de catalyseur solide selon la revendication 13, dans lequel le composé 1,3-diéther est le 9,9-bis(méthoxyméthyl)fluorène ou le 2-isopentyl-2-isopropyl-1,3-diméthoxypropane.

15. Composant de catalyseur solide selon l'une quelconque des revendications 1 à 7, dans lequel le composé E est l'o-méthoxybenzoate d'éthyle.

16. Composant de catalyseur solide selon la revendication 1, dont le spectre IR a un pic d'absorption caractéristique T dans une plage de 2 240 cm⁻¹ à 2 345 cm⁻¹.

17. Composant de catalyseur solide selon la revendication 1, dont le spectre IR a un pic d'absorption caractéristique T dans une plage de 2 240 cm⁻¹ à 2 295 cm⁻¹.

18. Catalyseur pour la polymérisation d'une oléfine de formule CH₂=CHR, dans laquelle R est un hydrogène ou un alkyle ayant 1 à 6 atomes de carbone, comprenant un produit de réaction des composants suivants :
(1) le composant de catalyseur solide selon l'une quelconque des revendications 1 à 17 ;
(2) un composé alkylaluminium ; et
(3) facultativement, un composé donneur d'électrons externe.

19. Catalyseur selon la revendication 18, ayant au moins une des caractéristiques suivantes :
- le composé alkylaluminium est un composé représenté par la formule générale AlR⁷₃₋ₐX¹ₐ, dans laquelle R⁷ est indépendamment un hydrogène ou un hydrocarbyle en C₁-C₂₀, et spécialement un alkyle en C₁-C₈ ; X est indépendamment un halogène, et spécialement un chlorure ; et a a une valeur dans une plage de 0 à 2 ;
- le composé alkylaluminium est utilisé dans une quantité telle qu'un rapport molaire de l'aluminium dans celui-ci sur le titane dans le composant de catalyseur solide (1) est dans une plage de 5 à 5 000, et préférablement de 50 à 1 000 ;
- le composé donneur d'électrons externe est choisi parmi des anhydrides carboxyliques, des esters carboxyliques, des cétones, des éthers, des lactones, des composés organophosphorés, et des composés organiques de silicium de formule R⁸ₐR⁹_{b}Si(OR¹⁰)_{c}, dans laquelle a et b sont indépendamment un entier dans une plage de 0 à 2, c est un entier dans une plage de 1 à 3, et la somme de (a+b+c) est 4 ; R⁸, R⁹ et R¹⁰ sont indépendamment un hydrocarbyle en C₁-C₁₈, et préférablement un alkyle linéaire ou ramifié en C₁-C₄ ou un cycloalkyle en C₅-C₆, contenant facultativement un (des) hétéroatome(s) ;
- le composé donneur d'électrons externe est utilisé dans une quantité dans une plage de 0,005 à 0,5 mole, préférablement de 0,01 à 0,25 mole, et plus préférablement de 0,02 à 0,1 mole, pour une mole du composé alkylaluminium ; et
- le composé alkylaluminium (2) et le composé donneur d'électrons externe (3) facultatif viennent au contact du et réagissent avec le composant actif (1) séparément ou comme un mélange.

20. Procédé de polymérisation d'une oléfine (d'oléfines), comprenant la mise en contact d'une oléfine de formule CH₂=CHR, dans laquelle R est un hydrogène ou un alkyle ayant 1 à 6 atomes de carbone, facultativement d'un autre type de ladite oléfine comme un comonomère, et facultativement d'un diène comme un deuxième comonomère, avec le catalyseur selon la revendication 18 sous des conditions de polymérisation ; et la récupération du polymère résultant.
